# EUROPEAN PATENT SPECIFICATION

(11) **EP 1 956 696 B1**
(45) Date of publication and mention of the grant of the patent: **21.03.2012**
(21) Application number: 06122702.1
(22) Date of filing: 20.10.2006
(51) Int. Cl.: H02J 13/00, H01R 13/66

(54) **A MV or HV power distribution cubicle with integrated digital communication, and a multi-functional module for such a cubicle**
Mittel oder Hochspannungsenergieverteilungsschrank mit integrierter digitalen Kommunikation und Multifunktionsbaustein dazu
Armoire de distribution d'énergie haute ou moyenne tension avec communication digitale intégrée, et module multifonction pour telle armoire

(43) Date of publication of application: 13.08.2008
(73) Proprietor: ABB Technology AG, 8050 Zürich (CH)
(72) Inventor: Gemme, Carlo, 27100, Pavia (IT); Suardi, Gabriele, 24060, Endine Gaiano (BG) (IT)
(74) Representative: Giavarini, Francesco

(56) References cited:
- EP-A- 0 581 078
- WO-A-96/08784
- WO-A-03/073182
- US-A1- 2003 212 473

## Description

The present invention relates to a medium or high voltage power distribution cubicle with integrated digital communication busses. More particularly, the present invention relates to a medium voltage power distribution cubicle which is suitable for the use in indoor switchgear systems for electric power distribution. The present invention relates also to a multi functional module for such a cubicle.

It should be understood hereinafter that with the term "high voltage" (HV) is to be considered a voltage level higher than1 KV. In such field of voltages, with the term "medium voltage" (MV) is usually considered a voltage level ranging approximately between 1 KV and 100 KV.

As known, indoor switchgear systems for electric power distribution are designed as cubicles of equipment tied together to form a complete switchgear line-up. More precisely, a switchgear line-up is traditionally composed of one to several cubicles, each of which comprises a switchgear provided with one or more primary equipment devices, such as for example a circuit breaker or a switch, for performing primary functions related to the main voltage, current and power distribution. Some examples of primary functions are breaking, conducting the nominal current, withstanding the short circuit current for a certain time, disconnecting, earthing, isolating live part from operators.

On the switchgear panel one or more secondary equipment devices, such as for example relays, sensors, meters, push buttons, are usually mounted and isolated from said primary equipment devices. Such second equipment devices perform secondary functions such as for example, protection, interlock, supervision (local or remote), control (local or remote), automation, measure, metering, diagnostic, communication. These devices are therefore operatively connected to structural and/or functional parts of the primary devices to allow the management and the control of these latter. For this scope, they can be also connected each other to share information consisting, for example, of interlocks coordination of protection functions, control logic digital and analogical I/O signals routed for external connection, communication system connection, etc.

Each cubicle, in its essential configuration, is completed by an intelligent electronic device in communication, for example wired, to said primary and secondary equipment devices in order to share information and for example to perform protection and control functions. The intelligent electronic device of one cubicle can be in communication to that of other cubicles forming the switchgear line-up. Moreover the intelligent electronic device could be located in a control panel of the cubicle outwardly of the switchgear. In other known applications the cubicle comprises a plurality of intelligent electronic devices one of which can be also located on the primary switchgear.

Traditional cubicles are wired according to the detailed functionality required by the user, and devices are interconnected within each cubicle and throughout line-up by point to point hard wired connections. At present these last features of the known cubicles are actually a drawback for the same cubicles. Since hard wiring connections are strongly depending on the single plant, the result is represented by the construction of completely customized cubicles and consequently customized switchgears. That means long times and costs related to engineering design, switchgear manufacturing, commissioning and service, upgrade of plants, low flexibility.

US 2003/0212473 A1 and EP 0581078 A2 disclose a power distribution system for supplying an industrial facility and a monitoring system for LV loads respectively, comprising plural customized hard-wiring connections.

Consequently, the main aim of the present invention is to provide a MV or HV power distribution cubicle which will enable the drawbacks indicated above to be overcome.

Within this aim, a purpose of the present invention is to provide a MV or HV power distribution cubicle having a reduce number of hard-wired connections.

Another purpose of the present invention is to provide a MV or HV power distribution cubicle which does not require customisation depending of the plant and/or the particular customer.

Further purpose of the present invention is to provide a MV or HV power distribution cubicle which does not require long times related to engineering design, manufacturing, commissioning and service.

Not the last important purpose of what forms the subject of the present invention is to provide a MV or HV power distribution cubicle that will present a high reliability and will be relatively easy to produce at competitive costs.

The above main aim, as well as the above and other purposes that will appear more clearly hereinafter, are achieved through a MV or HV power distribution cubicle as indicated in claim 1 and in the depending claims.

The present invention also encompasses a multi-functional module for a MV or HV power distribution cubicle of the type comprising at least one primary equipment device, at least one secondary equipment device, and at least a first intelligent electronic device operatively communicating with said at least one secondary equipment device. The multi-functional module is in particular characterized in that it comprises:
- at least one digital connector comprising a first portion and a second portion which mate to each other, said at least one digital connector being suitable to be connected to a first digital communication bus so as to put into operative communication said at least one secondary device with said first intelligent electronic device;
- a first support element comprising a plug part having a plurality of electrical pins, and a second support element which is operatively coupled to said first support element and comprises a socket part having a plurality of holes each of which suitable to house a corresponding pin, said first and second support elements being shaped so as to define a house accommodating said at least one digital connector;
- coupling means to couple said first support element to said second support element in such a way that said first portion and said second portion mate to each other, said coupling means enabling to interlock said first and second support elements so as to prevent their coupling or uncoupling and therefore coupling or uncoupling of the plurality of electrical pins with the associated holes and of the two mated portions of the digital connector under predetermined conditions.

The use of a digital communication bus to connect the secondary equipment devices to the intelligent electronic device allows to transfer a higher number of information using a lower number of physical connections, for example hard wiring. In practice by this solution is possible to build new highly standardized MV cubicles and consequently new standardized switchgears line-up.

Further characteristics and advantages of the invention will emerge more clearly from the description of preferred, but non-exclusive, embodiments of the MV or HV power distribution cubicle according to the invention, illustrated by way of indicative and non limiting examples, with the aid of the attached drawings, in which:
Figures 1, 2 and 3 are block diagrams of possible embodiments of a MV or HV power distribution cubicle according to the present invention;
Figures from 4 to 7 are perspective views related to possible embodiments of one or more digital connectors of a MV or HV power distribution cubicle according the present invention;
Figure 8 is a block diagram of a further embodiment of a MV or HV power distribution cubicle according to the present invention;
Figures 9 and 10 are perspective views relative to a first element of a support module of a MV or HV power distribution cubicle according to the present invention;
Figures 11 and 12 are perspective views relative to a second element of a support module of a MV or HV power distribution cubicle according to the present invention;
Figure 13 is a perspective view of a support element of a MV or HV power distribution cubicle according to the present invention.

With reference to the above figures the medium-or high-voltage power distribution cubicle 1, according to the present invention, (hereinafter indicated also as a MV or HV cubicle 1) comprises a switchgear 2 provided with one or more primary equipment devices 10 suitable to perform primary functions related to the main voltage, current and/or power distribution. As above indicated, these primary functions comprise, for example, making, breaking, conducting the nominal current or also withstanding the short circuit current for a certain time. Therefore the primary devices 10 are constituted, for example, by a circuit breaker, an earthing switch or other functional units suitable to perform one of these primary functions.

The switchgear 2 also comprises one or more secondary equipment devices 20 suitable to perform secondary functions related to auxiliary and control features. Some secondary functions can be, for example, protection, interlocking, supervision (local or remote), control (local or remote), automation, measure, metering, diagnostic, communication. The secondary devices 20 are operatively linked to the primary devices 10 for managing and controlling the functioning of the same. Consequently the secondary devices 20 comprise, for example, relays, sensors, meters, push buttons, and other miscellaneous apparatus.

The MV or HV power cubicle 1 according to the invention comprises at least a first intelligent electronic device (hereinafter indicated also as first IED-1) operatively communicating with one or more of said secondary equipment devices 20 in order to mutually share information.

The expression "intelligent electronic device" is concerning a device incorporating one or more processors suitable to receive or send data/control from or to another equipment device.

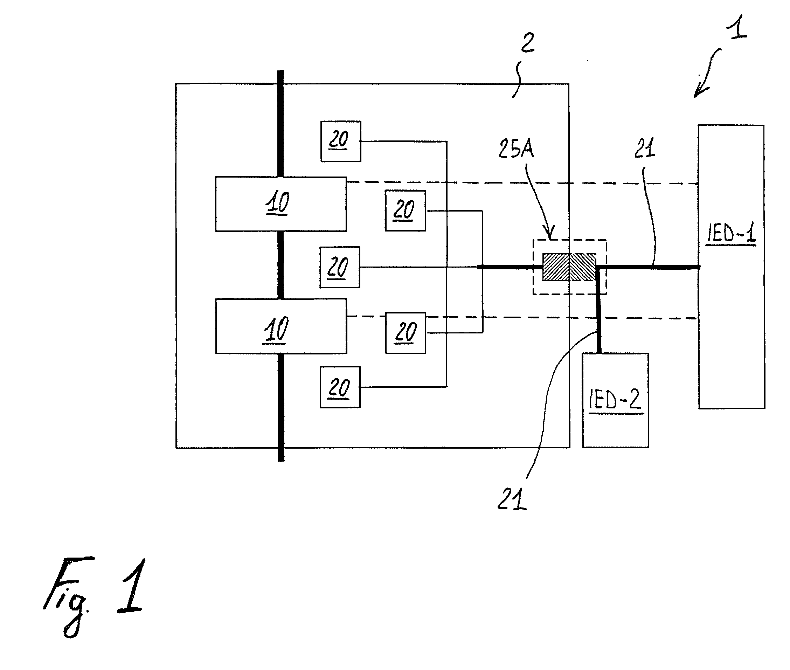

The first IED-1 is also connected in operative communication with one or more of said primary equipment devices 10 as illustrated for example in figure 1. In a first possible embodiment, said first IED-1 is located on cubicle 1, e.g. on the low voltage part, or on a panel isolated from the switchgear 2 so as to be used, for example, as a user interface. In a second alternative embodiment, the first IED-1 could be located directly on the switchgear 2. In those technical solutions, the IED-1 can be operatively in communication with other intelligent electronic devices of other MV or HV cubicles to allow a total monitoring and control of the switchgear line-up in which the cubicles are inserted.

With reference to figure 1, the MV o HV cubicle 1 according to the invention comprises at least a first digital communication bus 21 which is coupled to an associated first digital connector 25A. The first digital communication bus 21 and the first digital connector 25A coupled therewith connect in operative communication at least one of said secondary devices 20 with the first intelligent electronic device (IED-1).

The use of a digital communication bus 21 allows replacing traditional hard wired point-to-point connections and thus reducing the amount of the wiring on the switchgear 2. Consequently by this technical solution it is also possible to provide highly standardized MV or HV cubicles with a more efficient life cycle. In other words sharing information by means of a digital bus does not require hard-wiring customisation depending on the plant or the particular customer. That means the manufacturing costs are reduced as well as the engineering costs thanks to the use of highly standardized components.

In addition, the first digital communication bus 21 and the first digital connector 25A coupled therewith may also connect in operative communication the at least one secondary device 20 connected to the first intelligent electronic device with a second intelligent electronic device (hereinafter referred to as the IED-2). For instance, as schematically shown in figure 1, in this case the digital bus 21 is connected and passes through the first digital connector 25A running up to the required connection point with both intelligent electronic devices (IED-1, IED-2).

In particular, the second IED-2 can be advantageously mounted directly on the switchgear 2 in order to share with the secondary equipment devices 20 information of a different level with respect to those processed by the IED-1. Obviously, it must be considered part of the present invention the possibility to have a plurality of intelligent electronic devices mutually connected each other by a digital communication bus.

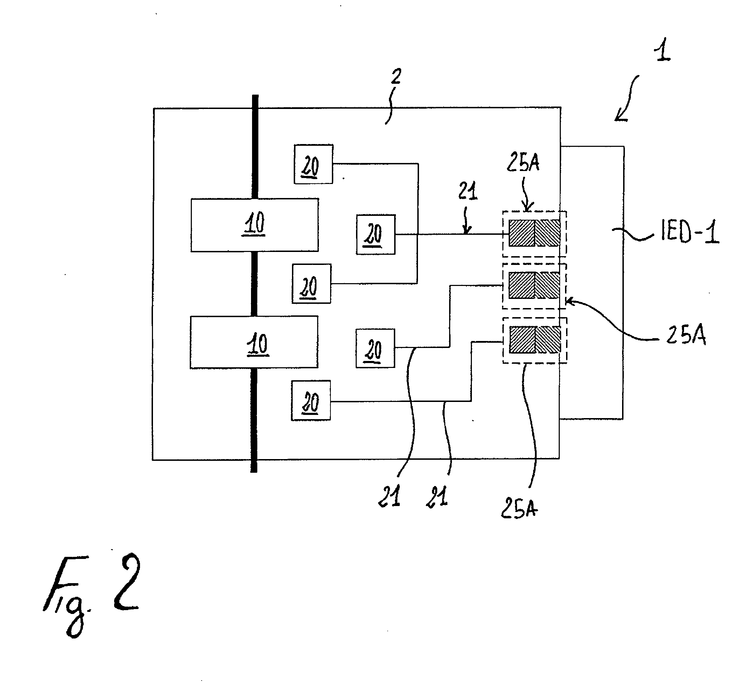

Figure 2 is a block diagram regarding another possible embodiment of the MV or HV cubicle 1 according to the invention which comprises a plurality of first digital communication busses 21 to connect one or more of said secondary equipment devices 20 to a plurality of first digital connectors 25A operatively connected to the first IED-1.

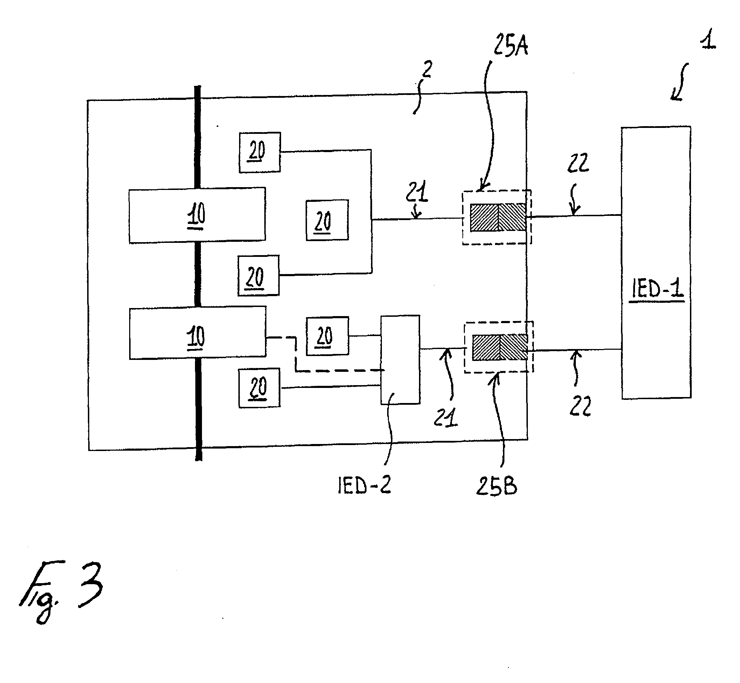

Figure 3 is another block diagram regarding a further possible embodiment of the MV or HV power distribution cubicle 1 which comprises a second digital communication bus 21 which connects a second intelligent electronic device to a second digital connector 25B which is operatively in communication with said first IED-1.

In the solutions up till now described, the first and the second digital communication busses 21 are preferably located on the switchgear 2 in order to reduce the number of bundle of wire. In practice, through the first communication bus 21 and/or the second digital communication bus 21 it is possible to share a large number of information using a single physical layer, for example, an optical fibre or an electrical communication cable.

At least one of either the first digital connector 25A and/or the second digital connector 25B can be connected directly to the IED-1 as for example illustrated in figure 2 for the various digital connectors 25A, or in an alternative embodiment, illustrated for example in figure 3, this connection can be performed by one or more third digital communication bus 22.

Clearly, in the present application the indication of first, second and third digital communication busses 21, 22, has to be understood as encompassing either the case where there is one functional bus constituted by one or more separate pieces or more busses performing different functionalities, e.g. connecting to different IEDs or to the same IED for the sake of redundancy.

Further, the first communication bus(ses) 21, and/or the second communication bus(ses) 21, and/or the third communication bus(ses) 22 can be preferably of the optical kind or can be wired electrical busses. In an alternative embodiment, they are process busses, for example of the kind known as "Ethernet", using one of the commercially available communication protocols Ethernet based. Obviously it must be clear that these digital communication busses could be chosen among other known types available on the market.

Figures from 4 to 7 are views of possible embodiments of digital connectors which can be used in the cubicle 1 according to the present invention.

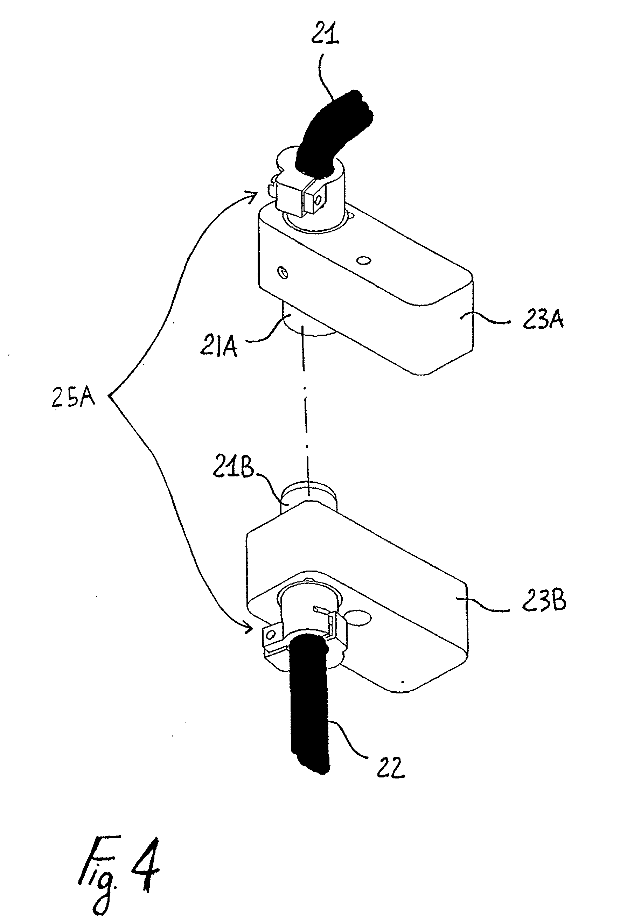

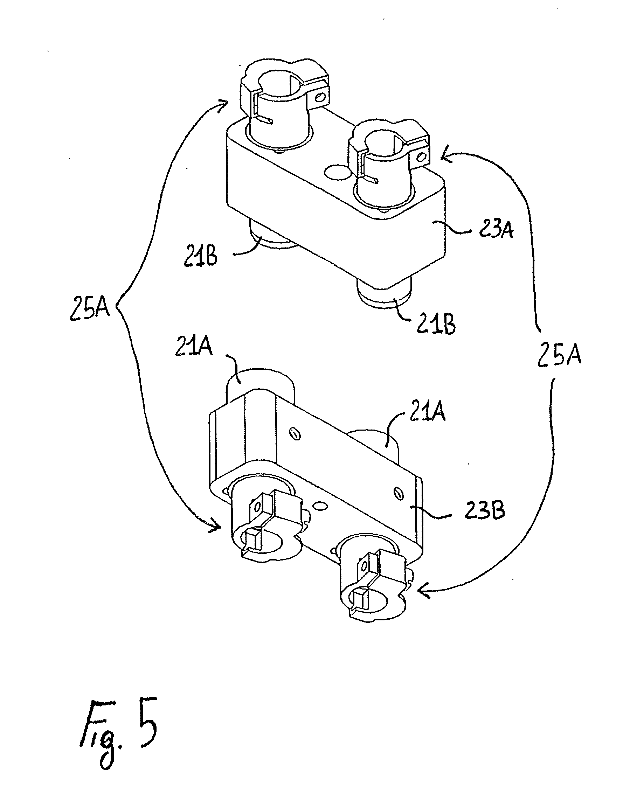

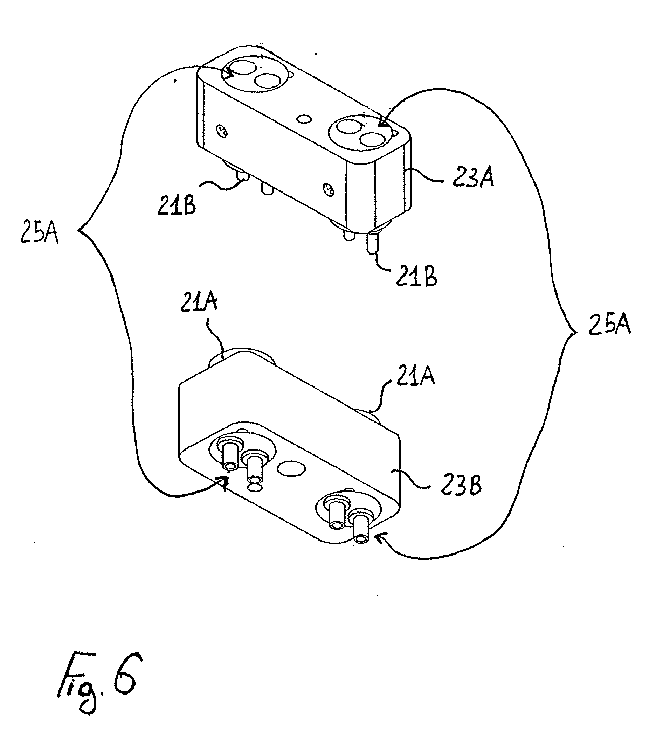

In particular, figures 4 and 5 illustrate digital connectors 25A (or likewise 25B) suitable to connect two digital process busses based on wired electrical solution. The solution illustrated in figure 6 is instead relative to optical connectors each suitable to connect two optical busses.

As illustrated in these figures, each digital connector 25A (or 25B) preferably comprises two parts which are connected to each other, preferably mechanically, more preferably through a plug-socket coupling. These two parts are then connected each to a corresponding element.

For instance, as illustrated in the embodiment of figure 4, a first digital connector 25A (or likewise a second digital connector 25B) comprises at least one socket shaped portion 21 A which is suitable to be connected, in a removable way, to a corresponding plug shaped portion 21B. One of these shaped portions 21A, 21B, for example the socket portion 21A, is connected to the first digital communication bus 21 while the other shaped portion, for example the plug portion 21B to go on with the example, can be operatively connected to the first IED-1, directly or by using another digital communication bus, such as a second digital bus 22. In the case of using also one or more second digital connectors 25B, one of the shaped portions 21A, 21B can instead be connected to a second digital communication bus 21A while the other shaped portion is connected to the first electronic device IED-1.

According to an embodiment shown in the figures, one of said shaped portions 21A,21B, e.g. the socket shaped portion 21A (see figure 4) is mounted or inserted on a first mounting element 23A, while the other shaped portion 21A,21B, e.g. the plug-shaped portion 21B (see figure 4) is placed on a second mounting element 23B.

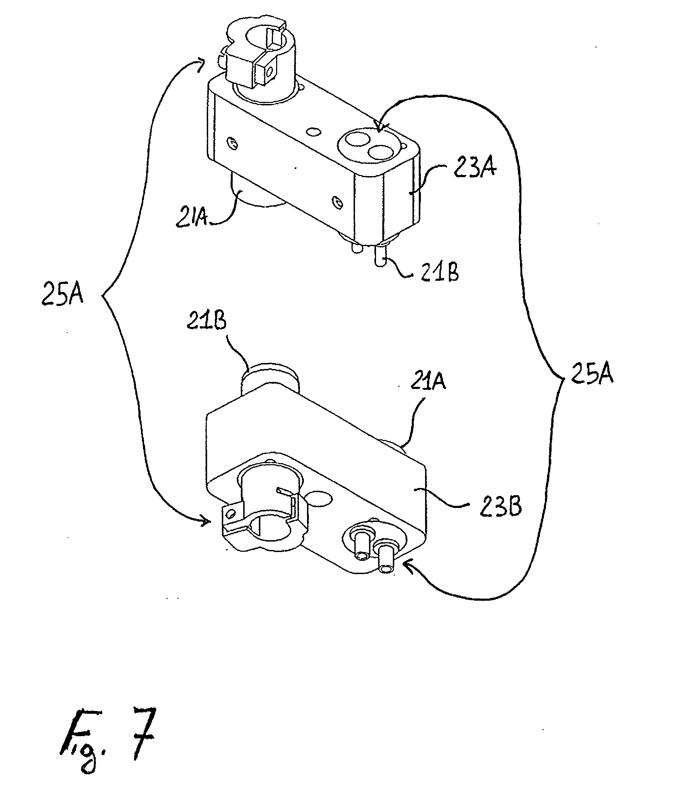

Clearly, the positioning and the number of the plug shaped portions 21A and of the socket shaped portions 21B can be varied according to various needs and applications. For example, in the embodiment of figures 5 and 6, there are two plug shaped portions 21B which are provided on the first element 23A while two socket shaped portions 21A are provided on the second element 23B. In the embodiment of figure 7, each illustrated element 23A or 23B carries one socket shaped portion 21A and one plug shaped portion 21B.

Figures 5 and 6 show the possible embodiment of digital connectors for optical busses and electrical busses respectively, while figure 7 shows the possible embodiment of digital connectors for both optical and electrical busses contemporary. Clearly, the type, positioning and number of optical and electrical digital connectors can be varied according to various needs and applications.

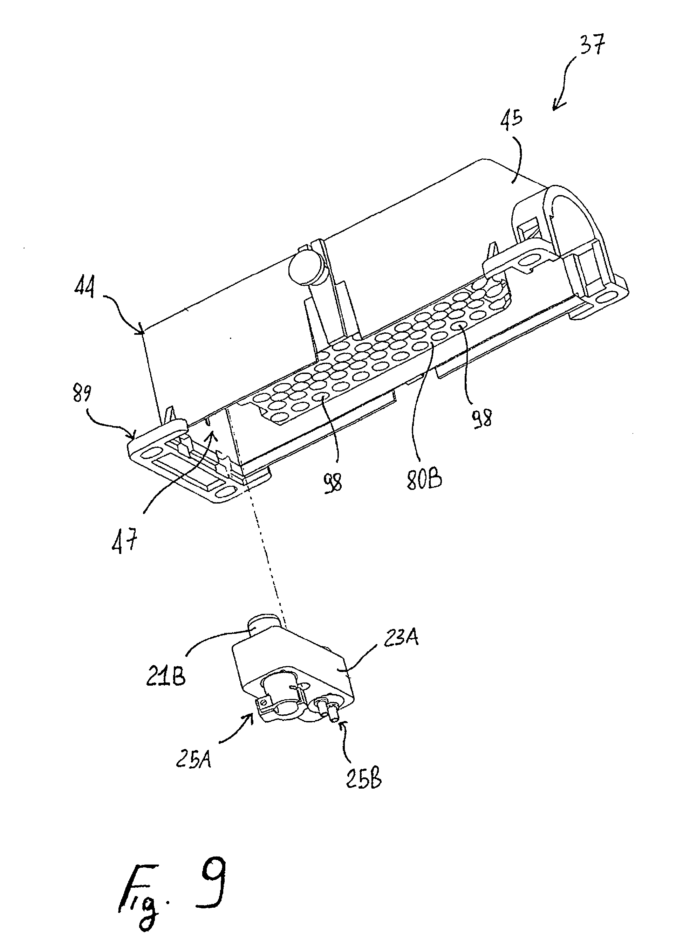

The mounting plates 23A, 23B have the main function of allowing to place the digital connectors 25A, 25B on a support module in order to make easier the installation of the same connectors. An example of a support module will be described hereinafter with reference to figures 9-13.

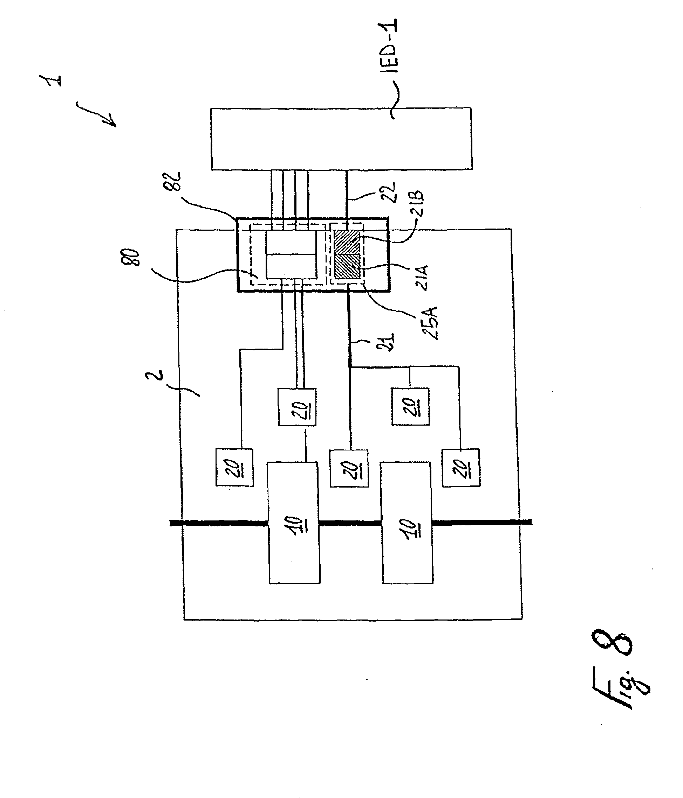

According to a particularly preferred embodiment schematized in the block diagram of figure 8, the MV or HV cubicle 1 according to the present invention advantageously comprises a support module 82 suitable to support one or more digital connectors 25A and/or 25B.

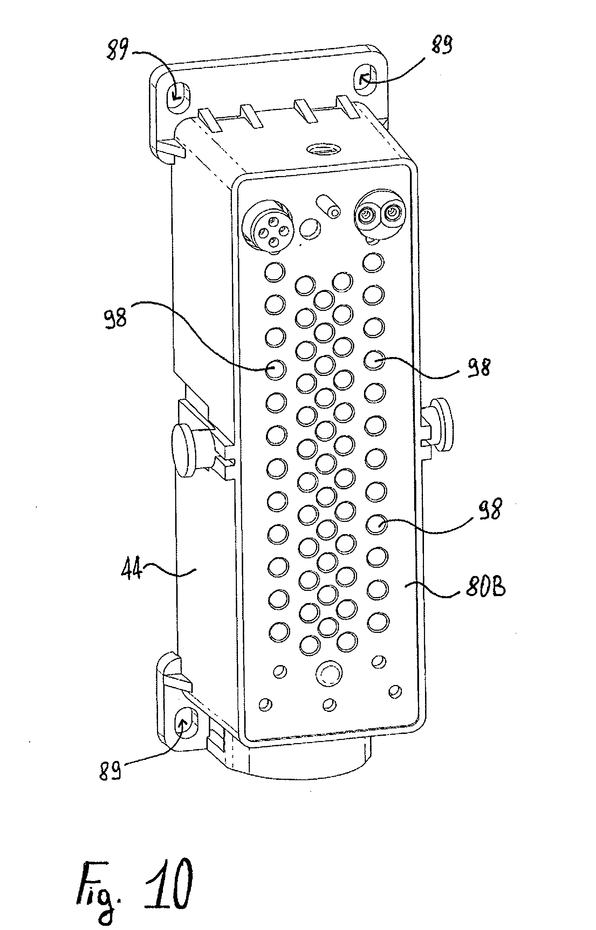

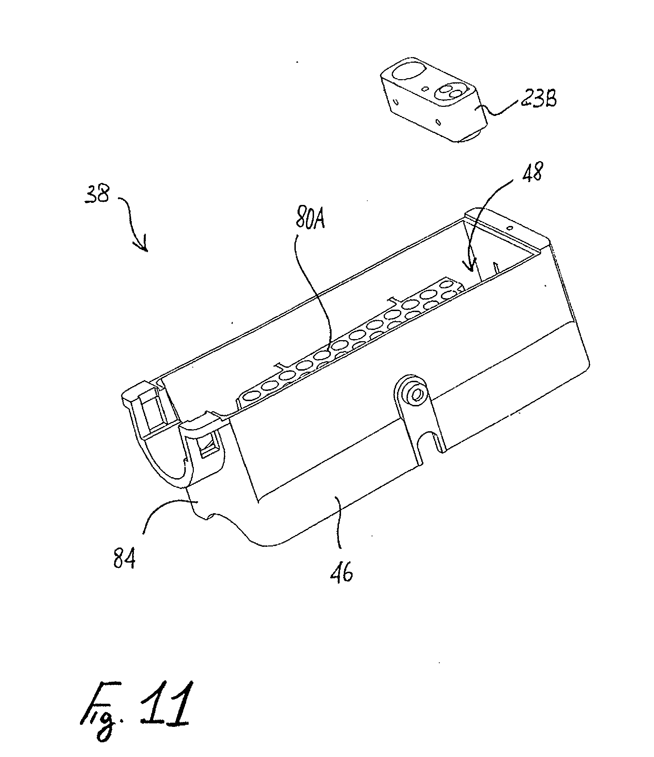

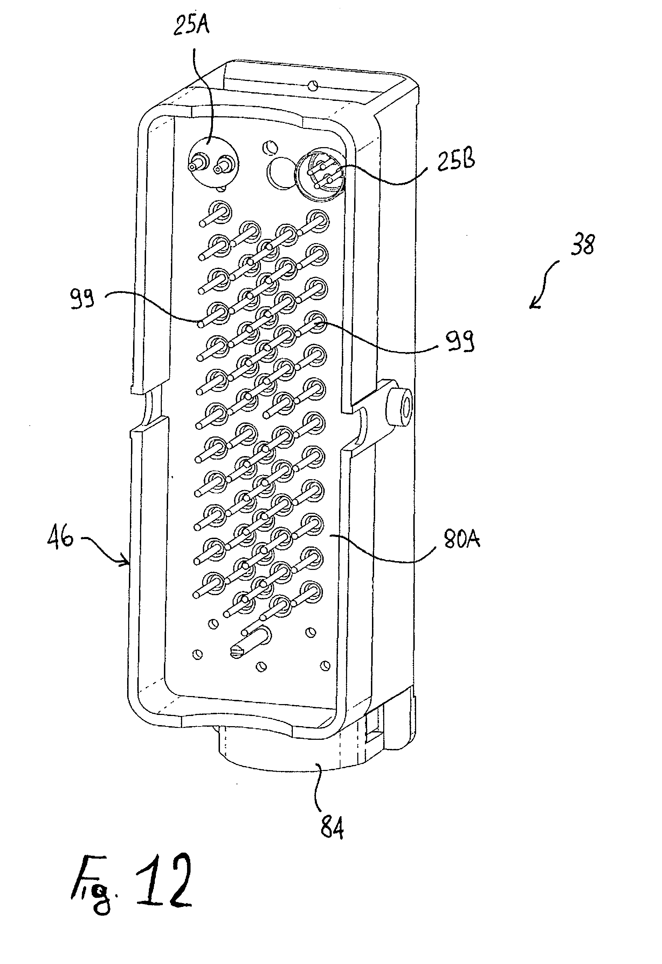

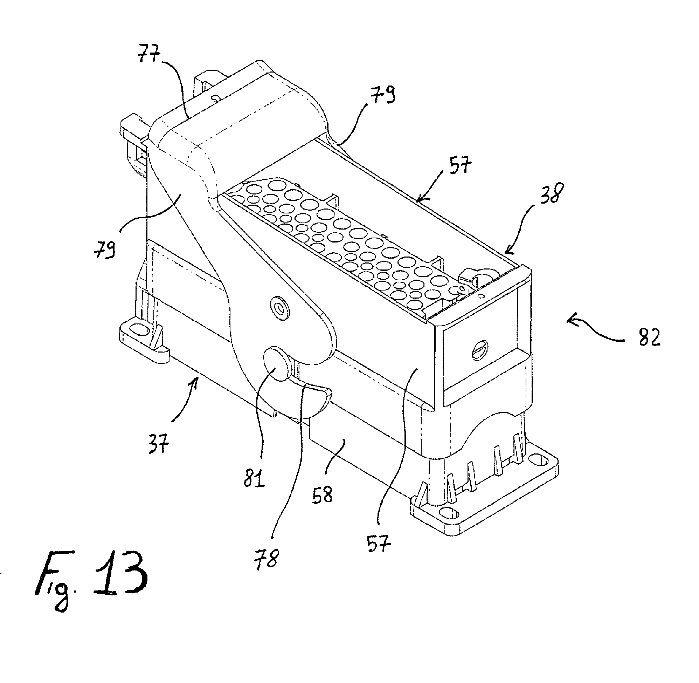

As illustrated in figure 13, the support module 82 preferably comprises a first support element 37, illustrated in figures 9 and 10, and a second support element 38 illustrated in figures 11 and 12. The first support element 37 comprises a first casing 44 which has a first seat 47, and the second support element 38 comprises a second casing 46 which defines a corresponding seat 48. These seats 47 and 48 are shaped so as to house each corresponding parts of the first digital connector (s) 25A and/or of the second digital connector(s) 25B. The support module 82 comprises also coupling means which are used to couple the first support element 37 to the second support element 38 in a releasable manner and in such a way that the shaped portions of the digital connector(s) housed in the respective seats 47, 48 can couple to each other.

For instance, as illustrated in the figures from 9 to 13, the first seat 47 of the first support element 37 is suitably shaped to house the first mounting plate 23A, while the second seat 48 of the second support element 38 is suitably shaped to house the second mounting plate 23B. The coupling means couple the support elements 37, 38 to each other in such a way that each shaped portions 21A (or 21B) mounted on the first mounting plate 23A (or 23B) can couple to a corresponding shaped portion 21B (or 21A) mounted on the second mounting plate 23B (or 23A). In other words, by their coupling, the supports elements 37, 38 perform also the coupling of the shaped portions 21A, 21B of the digital connector(s) 25A and/or 25B.

In another embodiment, the first seat 47 can be shaped to directly accommodate at least one portion, e.g. a first portion 21A, of one or more of the digital connectors 25A, 25B. In turn, also the second seat 48 can be shaped to directly accommodate at least one corresponding portion, e.g. a second portion 21B, of one or more of the digital connectors 25A, 25B. Also in this case, the coupling means couple the first support element 37 with the second support element 38 in such a way that each first portion 21A couples to a corresponding second portion 21B.

As better shown in figures 10 and 12, the support module 82 preferably comprises also a multi-point connection assembly 80 having a plug part 80A suitable to be connected to a corresponding socket part 80B. The plug part 80A is provided with a plurality of electrical pins 99, while the socket part 80B is provided with a plurality of holes 98 each of which suitable to mate with a corresponding pin 99. The main function of the multi-point connection assembly 80 is to provide a plurality of point-to-point connections which can be used to connect electrically the one or more primary devices 10 and the one or more secondary equipment devices 20 of the switchgear 2 to the first intelligent electronic device IED-1 or, for examples to other IEDs or secondary devices 20 in the switchgear line-up. To this end, one of the two parts 80A, 80B will be connected, for example, to the primary and/or the secondary devices 10, 20, by means of traditional wires, while the other part will be connected to the first intelligent electronic device IED-1. According to the invention, these point-to-point connections can be used mainly for the feeding of different devices or in alternative for transmitting information among the same.

As illustrated in figures 9 and 10, the socket part 80B is preferably defined directly on the structure of the first support element 37, namely on the first casing 44. Further, the first casing 44 comprises fixing means 89 to connect, for example, the first casing 44 to a supporting wall of the cubicle 1. A lateral wall 45 of the first casing 44 is partially opened to allow the passage of the cables containing the digital communication busses 21, 22 and of the wires connected to the socket part 80B. In turn, the plug part 80A is provided directly on the structure of the second support element 38, namely on the second casing 46. Further, the second casing 46 presents a lateral wall 84 with a passage for the digital busses and for the wires likewise the first casing 44 of the first support element 37.

As illustrated in the figures, the first support element 37 preferably presents a prismatic male configuration which develops longitudinally. Likewise the second support element 38 has a prismatic female configuration which defines an empty volume inside of which a part of said first support element 37 can be housed.

Figure 13 is a perspective view showing the components of the support module 82 connected to each other. As illustrated, the two support elements 37 and 38 are coupled by a coupling lever 77 having two arms 79 each of which hinged on a lateral wall 57 of the second support element 38. Each arm 79 has a countered slot 78 suitable to hook up a related pivot 81 placed on a corresponding lateral wall 58 of the first support element 37. When the countered slot 78 of each arm 79 hooks the corresponding pivot 81, the support elements 37, 38 are mechanically connected to each other. This means that also the shaped portions 21A, 21B of the digital connector(s) housed in the respective seats 47, 48 are mutually connected to each other, as well as the plug part 80A of the assembly 80 is connected to the corresponding socket part 80B. In practice, through the solution described, the connection of the parts of the assembly 80 is advantageously performed at the same time with the connection of the shaped portion 21A, 21B of the digital connectors and, above all, these two connections are performed in the same support module 82.

Clearly, the positioning of the coupling lever 77 and of the corresponding pivots 81 can be inverted, i.e. the pivots 81 can be positioned on the second support element 38 and the lever 77 can be hinged on the first support element 37.

As known, according to technical regulations and international standards, for example IEC standards, the cubicle 1 must be provided with an interlock system under predetermined conditions. For example, it is not allowed to perform either the disconnection of the switching element control circuit and therefore of the parts of the assembly 80 when the primary devices, for example the circuit breaker, are in the service position, and it is not allowed the racking in of the primary device, for example the circuit breaker, when the connection of the switching element control circuit and therefore of the parts of the assembly 80 is not enforced.

The structure of the support module 80 above described advantageously allows to use interlocks to fulfil the above regulation requirement and to extend it to the digital connectors 25A, 25B with a simple solution allowing to optimize design and manufacturing time and costs. In practice, with the above described solution, the coupling means enable to interlock the two supporting elements 37, 38 so as to prevent their coupling or uncoupling under predetermined conditions; as a consequence, coupling or uncoupling of the plurality of electrical pins (99) with the associated holes (98) and of the two mated portions (21A, 21B) of one or more digital connectors (25A, 25B) is also prevented when the predetermined conditions do not allow such operations.

The technical solutions adopted for the MV or HV power distribution cubicle 1 according to the present invention enable to fully achieve the foregoing tasks and purposes. In particular, the use of a digital bus to share information between the devices mounted on the switchgear and the intelligent electronic device allows transferring digital information in a reliable way reducing the wiring and increasing at the same time the control possibilities.

The MV or HV cubicle 1 thus conceived is susceptible of modifications and variations, all of which are within the scope of the inventive concept and as defined by the claims; all the details may furthermore be replaced with technically equivalent elements. For example, the seat 47 could be shaped to house the support element 23B or directly the connector portion(s) 21A, and/or 21B, and the seat 48 may be shaped to house the support element 23A or directly the connector portion (s) 21A, and/or 21B; the digital connectors can be realized in one single body, or in more than two separate portions, etc.

In practice, the materials used, so long as they are compatible with the specific use, as well as the dimensions, may be any according to the requirements and the state of the art.

## Claims

1. A MV or HV power distribution cubicle (1) comprising one or more primary equipment devices (10) aimed at performing one or more primary functions, one or more secondary equipment devices (20) aimed at performing one or more secondary functions, and at least a first intelligent electronic device (IED-1) operatively communicating with said one or more secondary equipment devices (20), **characterized in that** it comprises at least a first digital communication bus (21) which is coupled to an associated first digital connector (25A), said first digital communication bus (21) and said first digital connector (25A) connecting in operative communication at least one of said secondary devices (20) with said first intelligent electronic device (IED-1).

2. The MV or HV power distribution cubicle (1) according to claim 1 **characterized in that** said first digital communication bus (21) and said first digital connector (25A) connect in operative communication said at least one of said secondary devices (20) with a second intelligent electronic device (IED-2).

3. The MV or HV power distribution cubicle (1) according to claim1 or 2, **characterized in that** it comprises a plurality of first digital connection busses (21) to connect said one or more secondary equipment devices (20) to a plurality of first digital connectors (25A) operatively connected to said first intelligent electronic device (IED-1).

4. The MV or HV power distribution cubicle (1) according to claim 1, **characterized in that** it comprises a second digital communication bus (21) which connects a second intelligent electronic device (IED-2) to a second digital connector (25B) which is operatively in communication with said first intelligent electronic device (IED-1).

5. The MV or HV power distribution cubicle (1) according to one or more of the previous claims, **characterized in that** at least one of said first digital connectors (25A) and/or of said second digital connectors (25B) is directly connected to said first intelligent electronic device (IED-1).

6. The MV or HV power distribution cubicle (1) according to one or more of claims from 1 to 4, **characterized in that** at least one of said first digital connectors (25A) and/or of said second digital connectors (25B) is connected to said first intelligent electronic device (IED-1) by means of one or more third digital communication busses (22).

7. The MV or HV power distribution cubicle (1) according to one or more of the previous claims, **characterized in that** at least one of said first digital communication bus (21), and/or said second digital communication bus (21), and/or said third digital communication bus (22) is selected from the group consisting of an optical bus, a wired electrical bus, an Ethernet communication protocol-based process bus.

8. The MV or HV power distribution cubicle (1) according to one or more of the previous claims, **characterized in that** at least one of said first digital connectors (25A) and/or said second digital connectors (25B) comprises a first portion (21 A, 21B) and a second portion (21B, 21A) which are connected to each other mechanically.

9. The MV or HV power distribution cubicle (1) according to claim 8, **characterized in that** said at least one of said first digital connectors (25A) and/or said second digital connectors (25B) comprises a plug shaped portion (21 B) and a corresponding socket shaped portion (21A) suitable to be connected to each other in a removable way.

10. The MV or HV power distribution cubicle (1) according to claim 8, **characterized in that** said first portion (21A, 21B) and said second portion (21B, 21A) are mounted on two corresponding mounting plates (23A, 23B).

11. The MV or HV power distribution cubicle (1) according to one or more of the previous claims, **characterized by** the fact it comprises a support module (82) to support at least one of said first and/or said second digital connectors (25A,25B).

12. The MV or HV power distribution cubicle (1) according to claim 11, **characterized by** the fact said support module (82) comprises:
- a first support element (37) having a first seat (47) shaped to directly accommodate said first portion of said at least one of said first digital connector (25A) and/or said second digital connector (25B);
- a second support element (38) having a second seat (48) shaped to directly accommodate said second portion of said at least one of said first digital connector (25A) and/or said second digital connector (25B);
- coupling means to couple said first support element (37) to said second support element (38) in such a way that said first portion (21A, 21B) couples to said second portion (21 B, 21A).

13. The MV or HV power distribution cubicle (1) according to claim 11, **characterized by** the fact said support module (82) comprises:
- a first support element (37) having a first seat (47) suitable to house said first mounting plate (23A);
- a second support element (38) having a second seat (48) suitable to house said second mounting plate (23B);
- coupling means to couple said first support element (37) to said second support element (38) in such a way that said first portion (21A, 21B) positioned on said first mounting plate (23A) and said second portion (21 B, 21A) mounted on said second mounting plate (23B) couple to each other.

14. The MV or HV power distribution cubicle (1) according to one or more or claims from 11 to 13, **characterized by** the fact said support module (82) comprises a multi-point connection assembly (80) comprising a plug part (80A) suitable to be connected to a corresponding socket part (80B), said plug part (80A) being provided with a plurality of electrical pins (99), said socket part (80B) being provided with a plurality of corresponding holes (98) each of which suitable to house a corresponding pin (99).

15. The MV or HV power distribution cubicle (1) according to claim 14, **characterized in that** said first support element (37) comprises said plug part (80A) and said second support element (38) comprises said socket part (80B), said plug part (80A) being coupled operatively to said socket part (80B) when said first support element (37) is coupled to said second support element (38) by means of said coupling means.

16. The MV or HV power distribution cubicle (1) according to one or more of claims from 12 to 14, **characterized in that** said coupling means comprise a coupling lever (77) which is hinged on one of said first or second support element (37,38), and comprises a countered slot (78) suitable to hook up a pivot (79) placed on the other one of said first or second support element (37,38), said coupling lever (77) connecting mechanically said first and second support elements (37,38) to each other.

17. The MV or HV power distribution cubicle (1) according to one or more of the claims 11 to 16, **characterized in that** said coupling means enable to interlock said first and second support elements (37, 38) so as to prevent their coupling and/or uncoupling under predetermined conditions.

18. A multi-functional module for a MV or HV power distribution cubicle of the type comprising at least one primary equipment device (10), at least one secondary equipment device (20), and at least a first intelligent electronic device (IED-1) operatively communicating with said at least one secondary equipment device (20), **characterized in that** it comprises:
- at least one digital connector (25A) comprising a first portion and a second portion which mate to each other, said at least one digital connector (25A) being suitable to be connected to a first digital communication bus (21) so as to put into operative communication said at least one secondary device (20) with said first intelligent electronic device (IED-1);
- a first support element (37) comprising a plug part (80A) having a plurality of electrical pins (99), and a second support element (38) which is operatively coupled to said first support element (37) and comprises a socket part (80B) having a plurality of holes (98) each ofwhich suitable to house a corresponding pin (99), said first and second support elements (37, 38) being shaped so as to define a house accommodating said at least one digital connector (25A);
- coupling means to couple said first support element (37) to said second support element (38) in such a way that said first portion (21A) and said second portion (21 B) mate to each other, said coupling means enabling to interlock said first and second support elements (37, 38) so as to prevent their coupling or uncoupling and therefore coupling or uncoupling of the plurality of electrical pins (99) with the associated holes (98) and of the two mated portions (21A, 21B) of the digital connector (25A) under predetermined conditions.

## Patentansprüche

1. MV- oder HV-Leistungsverteilungsschrank (1), aufweisend eine oder mehrere Primärausrüstungsvorrichtungen (10), mit denen eine oder mehrere Primärfunktionen ausgeführt werden sollen, eine oder mehrere Sekundärausrüstungsvorrichtungen (20), mit denen eine oder mehrere Sekundärfunktionen ausgeführt werden sollen, und zumindest eine erste intelligente elektronische Vorrichtung (IED-1), die mit der einen oder den mehreren Sekundärausrüstungsvorrichtungen (20) operativ kommuniziert, **dadurch gekennzeichnet, dass** dieser zumindest einen ersten digitalen Kommunikationsbus (21) aufweist, der mit einem zugeordneten ersten digitalen Verbinder (25A) gekuppelt ist, wobei der erste digitale Kommunikationsbus (21) und der erste digitale Verbinder (25A) zumindest eine der Sekundärvorrichtungen (20) mit der ersten intelligenten elektronischen Vorrichtung (IED-1) in operativer Kommunikation verbinden.

2. MV- oder HV-Leistungsverteilungsschrank (1) nach Anspruch 1, **dadurch gekennzeichnet, dass** der erste digitale Kommunikationsbus (21) und der erste digitale Verbinder (25A) die zumindest eine der Sekundärvorrichtungen (20) mit einer zweiten intelligenten elektronischen Vorrichtung (IED-2) in operativer Kommunikation verbinden.

3. MV- oder HV-Leistungsverteilungsschrank (1) nach Anspruch 1 oder 2, **dadurch gekennzeichnet, dass** er eine Mehrzahl von ersten digitalen Verbindungsbussen (21) aufweist, um die eine oder die mehreren Sekundärausrüstungsvorrichtungen (20) mit einer Mehrzahl von ersten digitalen Verbindern (25A) zu verbinden, die mit der ersten intelligenten elektronischen Vorrichtung (IED-1) operativ verbunden sind.

4. MV- oder HV-Leistungsverteilungsschrank (1) nach Anspruch 1, **dadurch gekennzeichnet, dass** er einen zweiten digitalen Kommunikationsbus (21) aufweist, der eine zweite intelligente elektronische Vorrichtung (IED-2) mit einem zweiten digitalen Verbinder (25B) verbindet, der mit der ersten intelligenten elektronischen Vorrichtung (IED-1) operativ in Kommunikation steht.

5. MV- oder HV-Leistungsverteilungsschrank (1) nach einem oder mehreren der vorherigen Ansprüche, **dadurch gekennzeichnet, dass** zumindest entweder der erste digitale Verbinder (25A) und/oder der zweite digitale Verbinder (25B) mit der ersten intelligenten elektronischen Vorrichtung (IED-1) direkt verbunden ist.

6. MV- oder HV-Leistungsverteilungsschrank (1) nach einem oder mehreren der Ansprüche 1 bis 4, **dadurch gekennzeichnet, dass** zumindest entweder der erste digitale Verbinder (25A) und/oder der zweite digitale Verbinder (25B) mit der erste intelligenten elektronischen Vorrichtung (IED-1) mittels einem oder mehreren der dritten digitalen Kommunikationsbusse (22) verbunden ist.

7. MV- oder HV-Leistungsverteilungsschrank (1) nach einem oder mehreren der vorherigen Ansprüche, **dadurch gekennzeichnet, dass** zumindest entweder der erste digitale Kommunikationsbus (21) und/oder der zweite digitale Kommunikationsbaus (21) und/oder der dritte digitale Kommunikationsbus (22) aus der Gruppe bestehend aus einem optischen Bus, einem verdrahteten elektrischen Bus, einem Bus auf Basis eines Ethernet-Kommunikationsprotokolls ausgewählt ist.

8. MV- oder HV-Leistungsverteilungsschrank (1) nach einem oder mehreren der vorherigen Ansprüche, **dadurch gekennzeichnet, dass** zumindest entweder einer von den ersten digitalen Verbinder (25A) und/oder den zweiten digitalen Verbinder (25B) einen ersten Abschnitt (21A, 21B) und einen zweiten Abschnitt (21B, 21A) aufweist, die mechanisch miteinander verbunden sind.

9. MV- oder HV-Leistungsverteilungsschrank (1) nach Anspruch 8, **dadurch gekennzeichnet, dass** zumindest einer von entweder den ersten digitalen Verbindern (25A) und/oder den zweiten digitalen Verbindern (25B) einen steckerförmigen Abschnitt (21B) und einen entsprechenden buchsenförmigen Abschnitt (21A) aufweist, die geeignet sind, lösbar miteinander verbunden zu werden.

10. MV- oder HV-Leistungsverteilungsschrank (1) nach Anspruch 8, **dadurch gekennzeichnet, dass** der erste Abschnitt (21A, 21B) und der zweite Abschnitt (21B, 21A) auf zwei entsprechenden Befestigungsplatten (23A, 23B) befestigt sind.

11. MV- oder HV-Leistungsverteilungsschrank (1) nach einem oder mehreren der vorherigen Ansprüche, **gekennzeichnet durch** die Tatsache, dass er ein Haltemodul (82) zum Halten von zumindest einem der ersten und/oder zweiten digitalen Verbinder (25A, 25B) aufweist.

12. MV- oder HV-Leistungsverteilungsschrank (1) nach Anspruch 1, **gekennzeichnet durch** die Tatsache, dass das Haltemodul (82) aufweist:
- ein erstes Halteelement (37) mit einem ersten Sitz (47), der so geformt ist, dass er den ersten Abschnitt von zumindest dem ersten digitalen Verbinder (25A) und/oder dem zweiten digitalen Verbinder (25B) direkt aufnehmen kann;
- ein zweites Halteelement (38) mit einem zweiten Sitz (48), der so geformt ist, dass er den zweiten Abschnitt von zumindest dem ersten digitalen Verbinder (25A) und/oder dem zweiten digitalen Verbinder (25B) direkt aufnehmen kann;
- Kupplungseinrichtungen zum Kuppeln des ersten Halteelements (37) mit dem zweiten Halteelement (38) in einer solchen Weise, dass der erste Abschnitt (21A, 21B) mit dem zweiten Abschnitt (21B, 21A) gekuppelt ist.

13. MV- oder HV-Leistungsverteilungsschrank (1) nach Anspruch 1, **gekennzeichnet durch** die Tatsache, dass das Haltemodul (82) aufweist:
- ein erstes Halteelement (37) mit einem ersten Sitz (47), der geeignet ist, die erste Befestigungsplatte (23A) aufzunehmen;
- ein zweites Halteelement (38) mit einem zweiten Sitz (48), der geeignet ist, die zweite Befestigungsplatte (23B) aufzunehmen;
- Kupplungseinrichtungen zum Kuppeln des ersten Halteelements (37) mit dem zweiten Halteelement (38) in einer solchen Weise, dass der erste Abschnitt (21A, 21B) auf der ersten Befestigungsplatte (23A) positioniert ist und der zweiten Abschnitt (21B, 21A) auf der zweiten Befestigungsplatte befestigt ist.

14. MV- oder HV-Leistungsverteilungsschrank (1) nach einem oder mehreren der Ansprüche 11 bis 13, **gekennzeichnet durch** die Tatsache, dass das Haltemodul (82) eine Mehrpunktverbindungsanordnung (80) aufweist, die ein Steckerteil (80A), das geeignet ist, um mit einem entsprechenden Buchsenteil (80B) verbunden zu werden, aufweist, wobei das Steckerteil (80A) mit einer Mehrzahl von elektrischen Stiften (99) versehen ist, wobei das Buchsenteil (80B) mit einer Mehrzahl von entsprechenden Löchern (98) versehen ist, von denen ein jedes geeignet ist, einen entsprechenden Stift (99) aufzunehmen.

15. MV- oder HV-Leistungsverteilungsschrank (1) nach Anspruch 14, **dadurch gekennzeichnet, dass** das erste Halteelement (37) das Steckerteil (80A) aufweist, und das zweite Halteelement (38) das Buchsenteil (80B) aufweist, wobei das Steckerteil (80A) operativ mit dem Buchsenteil (80B) gekuppelt ist, wenn das erste Halteelement (37) mit dem zweiten Halteelement (38) mittels der Kuppeleinrichtungen gekuppelt ist.

16. MV- oder HV-Leistungsverteilungsschrank (1) nach einem oder mehreren der Ansprüche 12 bis 14, **dadurch gekennzeichnet, dass** die Kuppeleinrichtungen einen Kupplungshebel (77), der an dem ersten und/oder dem zweiten Halteelement (37, 38) schwenkbar gelagert ist, aufweist und einen gegenüberliegenden Schlitz (78) aufweist, der geeignet ist, ein Pivot (79) einzuhaken, die auf dem jeweils anderen ersten und/oder zweiten Halteelement (37, 38) angeordnet ist, wobei der Kupplungshebel (77) das erste und das zweite Halteelement (37, 38) mechanisch miteinander verbindet.

17. MV- oder HV-Leistungsverteilungsschrank (1) nach einem oder mehreren der Ansprüche 11 bis 16, **dadurch gekennzeichnet, dass** die Kupplungseinrichtungen ermöglichen, dass das erste und das zweite Halteelement (37, 38) ineinander verriegelt werden können, um unter vorbestimmten Bedingungen deren Kupplung und/oder Entkupplung zu verhindern.

18. Multifunktionsbaustein für einen MV- oder HV-Leistungsverteilungsschrank des Typs, der zumindest eine Primärausrüstungsvorrichtung (10), zumindest eine Sekundärausrüstungsvorrichtung (20) und zumindest eine erste intelligente elektronische Vorrichtung (IED-1) aufweist, die mit der zumindest einen Sekundärausrüstungsvorrichtung (20) operativ kommuniziert, **dadurch gekennzeichnet, dass** es aufweist:
- zumindest einen digitalen Verbinder (25A), der einen ersten Abschnitt und einen zweiten Abschnitt aufweist, die zusammenpassen, wobei der zumindest eine digitale Verbinder (25A) geeignet ist, mit einem ersten digitalen Kommunikationsbus (21) verbunden zu werden, um die zumindest eine Sekundärvorrichtung (20) mit der ersten intelligenten elektronischen Vorrichtung (IED-1) in operative Verbindung zu versetzen;
- ein erstes Halteelement (37), das ein Steckerteil (80A) mit einer Mehrzahl von elektrischen Stiften aufweist, und ein zweites Halteelement (38), das mit dem ersten Halteelement (37) operativ gekuppelt ist und ein Steckerteil (80B) mit einer Mehrzahl von Löchern (98) aufweist, von denen ein jedes geeignet ist, einen entsprechenden Stift (99) aufzunehmen, wobei das erste und das zweite Halteelement (37, 38) so geformt sind, dass sie ein Gehäuse definieren, in dem zumindest ein digitaler Verbinder (25A) aufgenommen ist;
- Kupplungseinrichtungen zum Kuppeln des ersten Halteelements (37) mit dem zweiten Halteelement (38) in einer solchen Weise, dass der erste Abschnitt (21A) und der zweite Abschnitt (21B) zusammenpassen, wobei die Kupplungseinrichtungen ermöglichen, dass das erste und das zweite Halteelement (37, 38) ineinander verriegelt werden können, um unter vorbestimmten Bedingungen deren Kupplung und/oder Entkupplung und daher die Kupplung oder Entkupplung von einer Mehrzahl von elektrischen Stiften (99) in Bezug auf die zugeordneten Löcher (98) und der beiden zusammengepassten Abschnitte (21A, 21B) des digitalen Verbinders (25A) zu verhindern.

## Revendications

1. Armoire de distribution d'énergie MV ou HV (1) comprenant un ou plusieurs dispositifs d'équipement primaires (10) ayant pour but d'effectuer une ou plusieurs fonctions primaires, un ou plusieurs dispositifs d'équipement secondaires (20) ayant pour but d'effectuer une ou plusieurs fonctions secondaires, et au moins un premier dispositif électronique intelligent (IED-1) communiquant opérationnellement avec lesdits un ou plusieurs dispositifs d'équipement secondaires (20), **caractérisée en ce qu'**elle comprend au moins un premier bus de communication numérique (21) qui est couplé à un premier connecteur numérique associé (25A), ledit premier bus de communication numérique (21) et ledit premier connecteur numérique (25A) connectant en communication opérationnelle au moins un desdits dispositifs secondaires (20) avec ledit premier dispositif électronique intelligent (IED-1).

2. Armoire de distribution d'énergie MV ou HV (1) selon la revendication 1, **caractérisée en ce que** ledit premier bus de communication numérique (21) et ledit premier connecteur numérique (25A) connectent en communication opérationnelle ledit au moins un desdits dispositifs secondaires (20) avec un second dispositif électronique intelligent (IED-2).

3. Armoire de distribution d'énergie MV ou HV (1) selon la revendication 1 ou 2, **caractérisée en ce qu'**elle comprend une pluralité de bus de connexion numériques (21) pour connecter lesdits un ou plusieurs dispositifs d'équipement secondaires (20) à une pluralité de premiers connecteurs numériques (25A) connectés opérationnellement audit premier dispositif électronique intelligent (IED-1).

4. Armoire de distribution d'énergie MV ou HV (1) selon la revendication 1, **caractérisée en ce qu'**elle comprend un deuxième bus de communication numérique (21) qui connecte un second dispositif électronique intelligent (IED-2) à un second connecteur numérique (25B) qui est en communication opérationnelle avec ledit premier dispositif électronique intelligent (IED-1).

5. Armoire de distribution d'énergie MV ou HV (1) selon une ou plusieurs des revendications précédentes, **caractérisée en ce qu'**au moins un desdits premiers connecteurs numériques (25A) et/ou desdits seconds connecteurs numériques (25B) est connecté directement audit premier dispositif électronique intelligent (IED-1).

6. Armoire de distribution d'énergie MV ou HV (1) selon une ou plusieurs des revendications 1 à 4, **caractérisée en ce qu'**au moins un desdits premiers connecteurs numériques (25A) et/ou desdits seconds connecteurs numériques (25B) est connecté audit premier dispositif électronique intelligent (IED-1) au moyen d'un ou plusieurs troisièmes bus de communication numériques (22).

7. Armoire de distribution d'énergie MV ou HV (1) selon une ou plusieurs des revendications précédentes, **caractérisée en ce qu'**au moins un dudit premier bus de communication numérique (21) et/ou dudit deuxième bus de communication numérique (21) et/ou dudit troisième bus de communication numérique (22) est choisi dans le groupe comprenant un bus optique, un bus électrique filaire, un bus de processus basé sur le protocole de communication Ethernet.

8. Armoire de distribution d'énergie MV ou HV (1) selon une ou plusieurs des revendications précédentes, **caractérisée en ce qu'**au moins un desdits premiers connecteurs numériques (25A) et/ou desdits seconds connecteurs numériques (25B) comprend une première partie (21A, 21B) et une seconde partie (21B, 21A) qui sont connectées l'une à l'autre mécaniquement.

9. Armoire de distribution d'énergie MV ou HV (1) selon la revendication 8, **caractérisée en ce qu'**au moins un desdits premiers connecteurs numériques (25A) et/ou desdits seconds connecteurs numériques (25B) comprend une partie en forme de fiche (21B) et une partie en forme de prise correspondante (21A) appropriées pour être connectées l'une à l'autre de façon amovible.

10. Armoire de distribution d'énergie MV ou HV (1) selon la revendication 8, **caractérisée en ce que** ladite première partie (21A, 21B) et ladite seconde partie (21B, 21A) sont montées sur deux plaques de montage correspondantes (23A, 23B).

11. Armoire de distribution d'énergie MV ou HV (1) selon une ou plusieurs des revendications précédentes, **caractérisée par le fait qu'**elle comprend un module de support (82) pour supporter au moins un desdits premiers et/ou desdits seconds connecteurs numériques (25A, 25B).

12. Armoire de distribution d'énergie MV ou HV (1) selon la revendication 11, **caractérisée par le fait que** ledit module de support (82) comprend :
- un premier élément de support (37) ayant une première embase (47) ayant une forme permettant d'accueillir directement ladite première partie dudit au moins un dudit premier connecteur numérique (25A) et/ou dudit second connecteur numérique (25B) ;
- un second élément de support (38) ayant une seconde embase (48) ayant une forme permettant d'accueillir directement ladite seconde partie dudit au moins un dudit premier connecteur numérique (25A) et/ou dudit second connecteur numérique (25B) ;
- des moyens de couplage pour coupler ledit premier élément de support (37) audit second élément de support (38) de telle sorte que ladite première partie (21A, 21B) se couple à ladite seconde partie (21B, 21A).

13. Armoire de distribution d'énergie MV ou HV (1) selon la revendication 11, **caractérisée par le fait que** ledit module de support (82) comprend :
- un premier élément de support (37) ayant une première embase (47) appropriée pour loger ladite première plaque de montage (23A) ;
- un second élément de support (38) ayant une seconde embase (48) appropriée pour loger ladite seconde plaque de montage (23B) ;
- des moyens de couplage pour coupler ledit premier élément de support (37) audit second élément de support (38) de telle sorte que ladite première partie (21A, 21B) positionnée sur ladite première plaque de montage (23A) et ladite seconde partie (21B, 21A) montée sur ladite seconde plaque de montage (23B) se couplent l'une à l'autre.

14. Armoire de distribution d'énergie MV ou HV (1) selon une ou plusieurs des revendications 11 à 13, **caractérisée par le fait que** ledit module de support (82) comprend un assemblage de connexion multipoint (80) comprenant une partie de fiche (80A) appropriée pour être connectée à une partie de prise correspondante (80B), ladite partie de fiche (80A) étant pourvue d'une pluralité de broches électriques (99), ladite partie de prise (80B) étant pourvue d'une pluralité de trous correspondants (98) dont chacun est approprié pour loger une broche correspondante (99).

15. Armoire de distribution d'énergie MV ou HV (1) selon la revendication 14, **caractérisée en ce que** ledit premier élément de support (37) comprend ladite partie de fiche (80A) et ledit second élément de support (38) comprend ladite partie de prise (80B), ladite partie de fiche (80A) étant couplée opérationnellement à ladite partie de prise (80B) lorsque ledit premier élément de support (37) est couplé audit second élément de support (38) au moyen desdits moyens de couplage.

16. Armoire de distribution d'énergie MV ou HV (1) selon une ou plusieurs des revendications 12 à 14, **caractérisée en ce que** lesdits moyens de couplage comprennent un levier de couplage (77) qui est articulé sur un dudit premier ou second élément de support (37, 38), et comprend une fente opposée (78) appropriée pour se raccorder à un pivot (79) placé sur l'autre dudit premier ou second élément de support (37, 38), ledit levier de couplage (77) connectant mécaniquement lesdits premier et second éléments de support (37, 38) l'un à l'autre.

17. Armoire de distribution d'énergie MV ou HV (1) selon une ou plusieurs des revendications 11 à 16, **caractérisée en ce que** lesdits moyens de couplage permettent de verrouiller lesdits premier et second éléments de support (37, 38) afin d'empêcher leur couplage et/ou découplage dans des conditions prédéterminées.

18. Module multifonctionnel pour une armoire de distribution d'énergie MV ou HV du type comprenant au moins un dispositif d'équipement primaire (10), au moins un dispositif d'équipement secondaire (20), et au moins un premier dispositif électronique intelligent (IED-1) communiquant opérationnellement avec ledit au moins un dispositif d'équipement secondaire (20), **caractérisé en ce qu'**il comprend :
- au moins un connecteur numérique (25A) comprenant une première partie et une seconde partie qui s'accouplent, ledit au moins un connecteur numérique (25A) étant approprié pour être connecté à un premier bus de communication numérique (21) afin de mettre en communication opérationnelle ledit au moins un dispositif secondaire (20) avec ledit premier dispositif électronique intelligent (IED-1) ;
- un premier élément de support (37) comprenant une partie de fiche (80A) ayant une pluralité de broches électriques (99), et un second élément de support (38) qui est couplé opérationnellement audit premier élément de support (37) et comprend une partie de prise (80B) ayant une pluralité de trous (98) dont chacun est approprié pour loger une broche correspondante (99), lesdits premier et second éléments de support (37, 38) ayant une forme permettant de définir un logement accueillant ledit au moins un connecteur numérique (25A) ;
- des moyens de couplage pour coupler ledit premier élément de support (37) audit second élément de support (38) de telle sorte que ladite première partie (21A) et ladite seconde partie (21B) s'accouplent, lesdits moyens de couplage permettant de verrouiller lesdits premier et second éléments de support (37, 38) afin d'empêcher leur couplage ou découplage et par conséquent le couplage ou découplage de la pluralité de broches électriques (99) avec les trous associés (98) et des deux parties accouplées (21A, 21B) du connecteur numérique (25A) dans des conditions prédéterminées.
